# EUROPEAN PATENT APPLICATION

(11) **EP 2 441 849 A2**
(43) Date of publication of application: **18.04.2012**
(21) Application number: 11008310.2
(22) Date of filing: 14.10.2011
(51) Int. Cl.: C21D 1/10, C21D 1/42, C21D 9/00, H05B 6/10

(54) **Selective case depth thermo-magnetic processing and apparatus**

(30) Priority: 14.10.2010 US 904698
(71) Applicant: Eaton Corporation, Cleveland, OH 44114-2584 (US)
(72) Inventor: Ahmad, Aquil, W. Bloomfield Michigan 48322 (US); Bogicevic, Alex, Clevaland, Ohio 44114-2584 (US)
(74) Representative: Emde, Eric

(57) **Abstract**

A method of altering characteristics of a workpiece comprising electrically conductive material includes exposing the workpiece to a magnetic field and exposing the workpiece to an induction field configured to cause heating current to flow through only a selected portion of the workpiece while the workpiece is exposed to the magnetic field. The induction field has a frequency such that the selected portion is less than the entire body of the workpiece or substantially only the outer surface of the workpiece. The method of altering characteristics of a workpiece may further include heating the entire body of the workpiece to a first temperature while the workpiece is exposed to the magnetic field and before exposing the workpiece to the induction field. The method of altering characteristics of a workpiece may further include quenching and tempering the workpiece in the magnetic field.

## Description

### FEDERAL FUNDING NOTICE

Portions of the present disclosure were developed with federal funding supplied under Cooperative Research and Development Agreement (CRADA) No. NFE-08-01224 between Eaton Corporation and UT-Battelle, LLC. UT-Battelle, LLC operates and manages Oak Ridge National Laboratory for the United States Department of Energy. The Government has certain rights in this invention.

### FIELD OF THE INVENTION

The present disclosure relates generally to the treatment of materials for altering the materials' characteristics. In particular, the present disclosure relates to a thermo-magnetic process and apparatus for altering the microstructure of the treated material

### BACKGROUND

Various processes exist for the purpose of altering and thereby improving a material's characteristics, including ductility, toughness, impact resistance, hardness, conductivity, magnetic properties, acoustic properties, and so on. Some known processes for altering characteristics of materials include annealing, carburizing, tempering, hardening, and so on. Some of these processes involve the treatment of materials at high temperatures below the material's melting temperature.

Carburizing, in particular, is a heat treatment process in which the material is heated in the presence of another material (e.g. gas or plasma) to harden the outer surface of the material, while the core remains ductile but tough. However, the process can be slow and can depend heavily on gas composition. Carburizing can also depend heavily on furnace temperature, which must be carefully controlled as the heat may also impact the microstructure of the rest of the material. In some cases, carburizing may also require very low pressures that may only be obtained in a vacuum chamber.

### SUMMARY

A method of altering characteristics of a workpiece comprising electrically conductive material includes exposing the workpiece to a magnetic field and exposing the workpiece to an induction field configured to cause heating current to flow through only a selected portion of the workpiece while the workpiece is exposed to the magnetic field. The induction field has a frequency such that the selected portion is less than the entire body of the workpiece or substantially only the outer surface of the workpiece.

The method of altering characteristics of a workpiece may further include, before exposing the workpiece to the induction field, heating the entire body of the workpiece to a first temperature while the workpiece is exposed to the magnetic field. The method of altering characteristics of a workpiece may further include quenching the workpiece in the magnetic field. The method of altering characteristics of a workpiece may also include tempering the workpiece in the magnetic field.

### BRIEF DESCRIPTION OF THE DRAWINGS

The accompanying drawings, which are incorporated in and constitute a part of the specification, illustrate various exemplary systems, methods, and so on, that illustrate various exemplary embodiments of aspects of the invention. A person of ordinary skill in the art will appreciate that the illustrated boundaries of components in the figures represent one example of the boundaries. A person of ordinary skill in the art will also appreciate that one component may be designed as multiple components or that multiple components may be designed as a single component. Additionally, an internal component may be implemented as an external component and vice versa. Further, the figures may be drawn not to scale and the proportions of certain parts may be exaggerated for convenience of illustration.

**Figure 1** illustrates an exemplary apparatus for altering characteristics of a workpiece.

**Figure 2** illustrates an exemplary method for altering characteristics of a workpiece.

**Figure 3** illustrates an exemplary method for altering characteristics of a workpiece.

### DETAILED DESCRIPTION

Exemplary apparatus and processes of the present disclosure involve exposure of a workpiece to a magnetic field and to associated thermal treatment such that characteristics of a workpiece material are affected by both the magnetic field and the thermal treatment. The thermal treatment involves an induction heating process at relatively high frequencies such that the workpiece material is affected through less than the entire body of the workpiece or substantially only at the workpiece's outer surface. Characteristics of the workpiece material may be altered in part based on the degree to which the material conducts electricity.

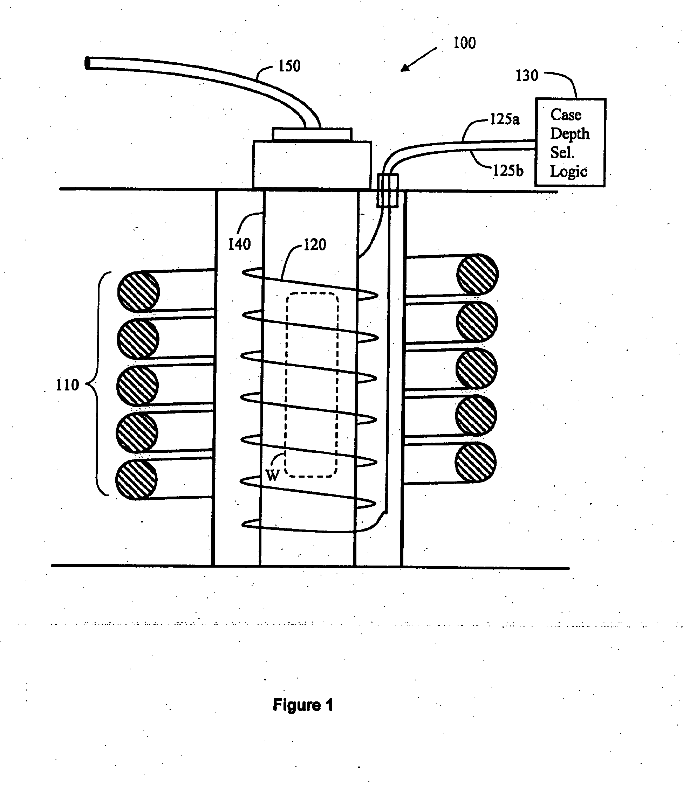

**Figure 1** illustrates an exemplary apparatus 100 for altering characteristics of a workpiece W. The workpiece W may be raw stock material or it may be finished or semifinished material such as a forging whose physical, mechanical, magnetic, and other characteristics may be improved by use of the apparatus 100.

The apparatus 100 includes a magnetic field generator 110 that generates a magnetic field within which the workpiece W can be positioned. The magnetic field generator 110 includes a coil, a cross sectional view of which is shown, constructed from a superconducting material. In one embodiment, the magnetic field generator 110 includes a coil constructed from material other than superconducting material. In other embodiments, the magnetic field generator may not include a coil, but may include a core or may be a resistive magnet, a permanent magnet, a hybrid magnet, and so on. In one embodiment, the magnetic field generator 110 generates a magnetic field with a magnetic flux density of between 1 and 30 Tesla. In one embodiment, the magnetic field generator 110 generates a magnetic field with a magnetic flux density of approximately 9 Tesla. In other embodiments, the magnetic field generator 110 may generate magnetic fields in excess of 30 Tesla.

The apparatus 100 further includes an induction heating coil 120 for purposes of heat treating the workpiece W. The induction heating coil 120 is configured for induction heating of the workpiece W while the workpiece W is exposed to the magnetic field generated by the magnetic field generator 110.

Alternating current provided at the leads 125a-b flows through the induction heating coil 120 and generates a changing magnetic field, also known as an induction field, within which the workpiece W can be positioned. The induction field induces electromotive forces (EMF) in the workpiece W that, in turn, produce eddy currents within the workpiece W. Since the workpiece W has an internal resistance to current flow, the eddy currents generate heat that causes a rise in temperature within the workpiece W. Thus, the apparatus 100 is effective in heating workpiece materials that are at least partially conductive.

Generally, the higher the frequency of the alternating current flowing through the induction coil 120, the higher the frequency of the induction field generated by the induction coil 120. Induction fields that have a relatively higher frequency induce heating currents in the workpiece W to flow more near the outer surface of the workpiece W and less near the core or center of the workpiece W. Thus, by exposing the workpiece W to a higher frequency induction fields, heating of the workpiece W may be concentrated at or near its outer surface. This selective heating may be beneficial if a desired result is to alter the characteristics of the workpiece W at or near its outer surface.

In one embodiment, the induction coil 120 is configured to generate an induction field having a frequency such that the induction field causes heating current to flow through only a selected portion of the workpiece that is less than the entire workpiece W. The required frequencies for induction heating the entire body of the workpiece W or less than the entire body of the workpiece W would depend on the workpiece W itself (e.g. material, geometry, and so on).

The apparatus 100 further includes a case depth selection logic 130 which is operably connected to the coil 120 via the leads 125a-b. The case depth selection logic 130 controls or allows a user to control certain parameters of the induction field based on a desired case depth of the portion of the workpiece to be treated. The case depth selection logic 130 selects the case depth in the sense that it controls various parameters (e.g. frequency, alternating current, exposure times, and so on) of induction fields generated by the induction coil 120. The coil 120 is configured to generate induction fields based on the parameters indicated by the case depth selection logic 130.

In some embodiments, the characteristics of alternating current corresponding to the induction field, including its frequency, are such that the selected portion is substantially only the outer surface of the workpiece W. The required frequency for induction heating only the outer surface of the workpiece W would depend on the workpiece W itself (e.g. material, geometry, and so on). However, the frequency required for induction heating only the outer surface of the workpiece W is a substantially higher frequency than the frequency required for induction heating the entire body of the workpiece W.

In one embodiment, substantially only the outer surface of the workpiece W corresponds to an effective case depth of between about 0.020 inches and about 0.040 inches. In other embodiments, substantially only the outer surface of the workpiece W may correspond to an effective case depth larger than about 0.020 inches or less than about 0.040 inches. In one embodiment, to achieve desired case depths, the induction coil 120 is configured to generate an induction field with a frequency of approximately 10 kHz. In other embodiments, the induction coil 120 is configured to generate an induction field with a frequency in the range of from 3 kHz to 20 kHz. In other embodiments, the induction coil 120 is configured to generate an induction field with a frequency in ranges other than from 3 kHz to 20 kHz.

In one embodiment, the induction coil 120 is configured to generate an induction field having a frequency such that heating of the workpiece W occurs substantially through the entire body of the workpiece W.

In one embodiment, the induction heating coil 120 generates two induction fields, one after the other. In this embodiment, the first induction field first heats substantially the entire workpiece W to a first temperature in the presence of the magnetic field, after which the second induction field heats substantially only the outer surface of the workpiece W to a second temperature in the presence of the magnetic field. In other embodiments, the induction heating coil 120 may generate only one induction field or it may generate more than two induction fields.

In one embodiment, the first temperature corresponds to substantially the workpiece W material's Curie temperature and the second temperature corresponds to a temperature above which the material is in the austenite phase. Thus, in this embodiment, the induction heating coil 120 heats substantially the entire body of the workpiece W to substantially the material's Curie temperature (e.g. approximately 768°C (1414°F) for steel or approximately 200°C to 300°C (400°F to 600°F) for cast iron, and so on) while the workpiece W is exposed to the magnetic field generated by the magnetic field generator 110. Following this first induction heating step, the induction heating coil 120 heats substantially the outer surface and near outer surface of the workpiece W to a temperature that causes the material to be completely in the austenitic phase (e.g. 840°C to 930°C (1,550°F to 1,700°F) for steel, and so on). This second induction heating step is followed by rapid cooling or quenching. When the material is cooled rapidly by quenching, the outer surface becomes hard, while the core remains ductile and tough. The modified microstructure of the workpiece W material provides improved wear resistance and creep resistance.

The required exposure times for exposure of the workpiece W to the magnetic fields or induction fields would depend on the workpiece W itself (e.g. material, geometry, and so on) and the desired characteristics for the workpiece W after exposure.

In other embodiments, the apparatus 100 may be used to heat portions of the workpiece W other than the entire workpiece W or the outer surface of the workpiece W to temperatures other than those discussed above (e.g. heating the surface and near surface of the workpiece W above the material's eutectoid temperature, tempering, and so on) to obtain desired characteristics in the workpiece W material.

In other embodiments, heating of substantially the entire body of the workpiece W to the first temperature may be accomplished by alternative heating methods (not shown) other than induction heating. Exemplary alternative heating methods include convection heating, resistance heating, electric arc heating, conduction, radiation, and so on. After the first temperature has been reached using an alternative heating method, the workpiece W may be induction heated using the induction heating coil 120 to raise the temperature of the outer surface to the second temperature. Heating of substantially the entire body of the workpiece W to the first temperature by alternative heating methods other than induction heating may take place while the workpiece W is exposed to the magnetic field.

In another embodiment, heating of substantially the entire body of the workpiece W to the first temperature may be accomplished by a second induction heating coil (not shown). For example, the second induction heating coil may be used to raise the temperature of substantially the entire body of the workpiece W to the first temperature. After the first temperature has been reached using the second induction heating coil, the workpiece W may be heated using the induction heating coil 120 to raise the temperature near the surface to the second temperature. Heating of substantially the entire body of the workpiece W to the first temperature using the second induction heating coil may take place while the workpiece W is exposed to the magnetic field.

The apparatus 100 further includes a chamber 140 within which the workpiece W is positioned. The chamber 140 may be constructed of non-magnetic materials (e.g. ceramic, quartz, plastic, and so on), which would not be affected by the magnetic fields generated by the magnetic field generator 110 or the induction fields generated by the induction heating coil 120. In one embodiment, the chamber 140 may be made of a magnetic material. In one embodiment, the chamber 140 is capable of holding a vacuum. Treating the workpiece W in a vacuum may be desirable in some applications to reduce the chances that the workpiece W will oxidize during treatment.

The apparatus 100 further includes a quencher 150. Quencher 150 is used to rapidly cool the workpiece W after the workpiece W has been heated. When cooling of the workpiece W is desired, the quencher 150 directs cooling fluid (e.g. purge gas, quench gas, argon, helium, hydrogen, water, and so on) into the chamber 140 where it comes into contact with the workpiece W. The cooling fluid rapidly removes heat from the workpiece W. In one embodiment, the apparatus 100 may not include the quencher 150 and quenching of the workpiece W may be accomplished by means external to the apparatus 100.

In one embodiment, after quenching, the workpiece W is tempered by heating the workpiece W to a temperature between the ranges of 150°C to 260°C and 370°C to 650°C while the workpiece W is exposed to the magnetic field generated by the magnetic field generator 110. For example, after quenching, the workpiece W may be tempered by induction heating the workpiece W using the induction heating coil 120. The workpiece W may be heated to approximately 180°C for approximately 10 to 20 minutes while the workpiece W is positioned within the magnetic field generated by the magnetic field generator 110. In other embodiments, the workpiece W may be tempered within the magnetic field at temperatures outside the ranges of 150°C to 260°C and 370°C to 650°C and for periods of times other than 10 to 20 minutes.

The apparatus 100 may further include controls (not shown) in addition to case depth selection logic 130. The controls can be manual or programmable to initiate and control operation of the various treatments of the workpiece W described above. Operations and settings that may be controlled, in addition to frequency and current include, but are not limited to, operation of the magnetic generator, operation of the heating equipment, temperature, appropriate hold times at each temperature, delivery of quenching fluids, safety shutdowns, and so on.

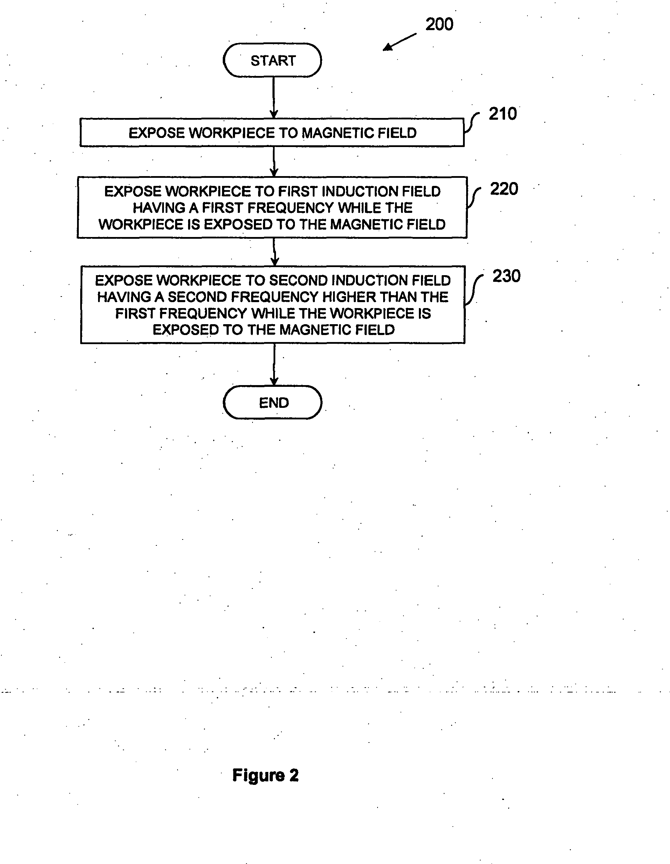

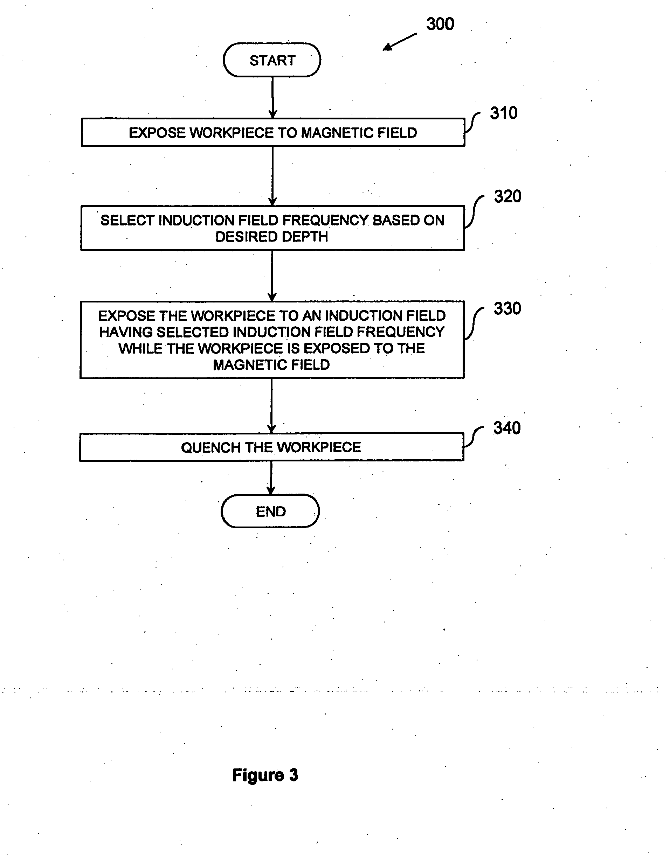

Example methods may be better appreciated with reference to the flow diagrams of **Figures 2** and **3****.** While for purposes of simplicity of explanation, the illustrated methodologies are shown and described as a series of blocks, it is to be appreciated that the methodologies are not limited by the order of the blocks, as some blocks can occur in different orders or concurrently with other blocks from that shown or described. Moreover, less than all the illustrated blocks may be required to implement an example methodology. Furthermore, additional or alternative methodologies can employ additional, not illustrated blocks. While **Figures 2** and **3** illustrate various actions occurring in serial, it is to be appreciated that various actions illustrated in **Figures 2** and **3** could occur substantially in parallel.

**Figure 2** illustrates an exemplary method 200 of altering characteristics of a workpiece. At 210, the method 200 exposes a workpiece to a magnetic field. At 220, the method 200 exposes the workpiece to a first induction field having a first frequency. At 230, the method 200 exposes the workpiece to a second induction field having a second frequency substantially higher than the first frequency. The second frequency may be configured such that second induction field heats a portion of the workpiece that is less than the entire workpiece while the workpiece is exposed to the magnetic field.

In one embodiment, the second induction field is configured to heat substantially only the outer surface of the workpiece while the workpiece is exposed to the magnetic field. In one embodiment, the second induction field is configured to heat substantially only the outer surface to a temperature above which the material is in the austenite phase while the workpiece is exposed to the magnetic field.

In one embodiment, the method 200 includes the first induction field heating substantially the entire body of the workpiece to the material's Curie temperature while the workpiece is exposed to the magnetic field prior to exposing the workpiece to the second induction field.

In one embodiment, the method 200 includes quenching the workpiece. In one embodiment, the quenching the workpiece occurs while the workpiece is exposed to the magnetic field.

In one embodiment, the method 200 includes tempering the workpiece while the workpiece is exposed to the magnetic field. In one embodiment, the tempering temperature is approximately 180° C and the workpiece is tempered for about 10 minutes. In other embodiments, the workpiece may be tempered at temperatures other than 180° C and for periods of time different than about 10 minutes while the workpiece is exposed to the magnetic field

**Figure 3** illustrates an exemplary method 300 of selectively heating a portion of a workpiece to alter characteristics of the workpiece. At 310, the method 300 includes exposing the workpiece to a magnetic field. At 320, the method 300 includes selecting an induction field frequency based on a desired depth of the portion to be heated. At 330, the method 300 includes exposing the workpiece to an induction field having a frequency corresponding to the selected induction field frequency while the workpiece is exposed to the magnetic field to heat the portion to the desired depth. At 340, the method 300 further includes quenching the workpiece.

By simultaneously exposing a workpiece to a magnetic field and an induction field, characteristics of the workpiece material may be improved. Moreover, by selecting the frequency of the induction field, portions of the workpiece may be selectively affected. The frequency of the induction field may be selected to specify a case depth of the workpiece to be heated by the induction field while simultaneous being exposed to the magnetic field. Various different case depths of the workpiece may be affected with different combinations of parameters to improve different characteristics. In some cases, the case depth may correspond to substantially only the outer surface of the workpiece. Characteristics such as hardness, ductility, toughness, wear resistance, and creep resistance, among others, of selected portions of the workpiece may be selectively improved.

"Logic," as used herein, includes but is not limited to hardware, firmware, software or combinations of each to perform a function(s) or an action(s), or to cause a function or action from another logic, method, or system. For example, based on a desired application or needs, logic may include manually adjustable circuitry, a software controlled microprocessor, discrete logic like an application specific integrated circuit (ASIC), a programmed logic device, a memory device containing instructions, or the like. Logic may include one or more gates, combinations of gates, or other circuit components. Logic may also be fully embodied as software.

An "operable connection," or a connection by which components are "operably connected," is one by which the operably connected components or the operable connection perform its intended purpose. For example, two components may be operably connected to each other directly or through one or more intermediate components. In another example, two components can be operably connected by being able to communicate signals to each other directly or through one or more intermediate components such as a conductor, a wire, a processor, a logic, or other component.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modem Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or multiple components.

While the present disclosure illustrates various embodiments, and while these embodiments have been described in some detail, it is not the intention of the applicant to restrict or in any way limit the scope of the claimed invention to such detail. Additional advantages and modifications will readily appear to those skilled in the art. Therefore, the invention, in its broader aspects, is not limited to the specific details and illustrative examples shown or described. Accordingly, departures may be made from such details without departing from the spirit or scope of the claimed invention. Moreover, the foregoing embodiments are illustrative, and no single feature or element is essential to all possible combinations that may be claimed in this or a later application.

## Claims

1. A method of altering material characteristics of a selected portion of a workpiece, the method comprising:
exposing the workpiece to a magnetic field;
selecting an induction field frequency based on a desired depth of the selected portion, where the desired depth is less than the entire workpiece;
exposing the workpiece to an induction field having a frequency corresponding to the selected induction field frequency while the workpiece is exposed to the magnetic field; and
quenching the workpiece.

2. The method of claim 1, where the selected portion corresponds to substantially only the outer surface of the workpiece.

3. The method of claim 1, further comprising:
heating the workpiece to a first temperature,
where the selected portion corresponds to substantially only the outer surface of the workpiece, and where the exposing the workpiece to the induction field heats the selected portion to a second temperature different from the first temperature.

4. The method of claim 3, where the first temperature corresponds to substantially the material's Curie temperature and the second temperature corresponds to at least one of substantially the material's eutectoid temperature and a temperature above which the material is in the austenite phase.

5. The method of claim 3, where the heating the workpiece to the first temperature includes exposing the workpiece to a second induction field having a second induction field frequency lower than the induction field frequency.

6. The method of claim 1, where the desired depth corresponds to an effective case depth of between approximately 0.020 inches and approximately 0.040 inches, and where the magnetic field has a magnetic flux density of between approximately 1 Tesla and approximately 30 Tesla.

7. A method of altering characteristics of a workpiece, the method comprising:
exposing the workpiece to a magnetic field;
exposing the workpiece to a first induction field having a first frequency while the workpiece is exposed to the magnetic field;
exposing the workpiece to a second induction field having a second frequency substantially higher than the first frequency while the workpiece is exposed to the magnetic field; and
quenching the workpiece.

8. The method of claim 7, where the workpiece has an outer surface, and where the second induction field causes heating current to flow through substantially only the outer surface of the workpiece.

9. The method of claim 8:
where exposing the workpiece to the first induction field causes heating current to flow substantially through the entire workpiece and heats substantially the entire workpiece to the workpiece material's Curie temperature while the workpiece is exposed to the magnetic field; and
where the exposing the workpiece to the second induction field heats substantially only the outer surface to a temperature above which the material is in the austenite phase while the workpiece is exposed to the magnetic field.

10. The method of claim 7, where the second frequency is selectable based on a desired case depth of the workpiece to be affected by the second induction field.

11. The method of claim 7, where the quenching the workpiece occurs while the workpiece is exposed to the magnetic field.

12. The method of claim 7, further comprising:
tempering the workpiece while the workpiece is exposed to the magnetic field.

13. The method of claim 12, where the tempering temperature is approximately 180°C.

14. An apparatus for selectively heating portions of a workpiece which includes material that is at least partially electrically conductive, the apparatus comprising:
a magnetic field generator configured to generate a magnetic field;
a case depth selection logic configured to indicate a case depth to be heated; and
at least one induction coil associated with the magnetic field generator and operably connected to the case depth selection logic and configured to generate an induction field that induces heating current in the workpiece that flow substantially only through the indicated case depth while the workpiece is exposed to the magnetic field.

15. The apparatus of claim 14, where the case depth corresponds to substantially only an outer surface of the workpiece, and/or
where the at least one induction coil is configured to generate a second induction field having a frequency substantially lower than that of the induction field such that heating currents induced by the second induction field flow through substantially the entire workpiece in the presence of the magnetic field, and/or
further comprising means for quenching the workpiece, and/or
further comprising means for heating substantially the entire workpiece to substantially the material's Curie temperature, and where the at least one induction coil is configured to generate the induction field to heat substantially only the outer surface of the workpiece to a temperature above which the material is in the austenite phase, and/or
further comprising means for tempering the workpiece within the magnetic field, and/or
where the magnetic field generator includes a superconducting coil.
